(19) **Europäisches Patentamt**
**European Patent Office**
**Office européen des brevets**

(11) **EP 4 119 913 A1**

(12) **EUROPEAN PATENT APPLICATION**
published in accordance with Art. 153(4) EPC

(43) Date of publication:
**18.01.2023 Bulletin 2023/03**

(21) Application number: **21797144.9**

(22) Date of filing: **13.04.2021**

(51) International Patent Classification (IPC):
**G01K 11/24** (2006.01)   **G01N 29/024** (2006.01)
**G01P 5/24** (2006.01)   **F24F 11/88** (2018.01)
**F24F 110/10** (2018.01)   **F24F 110/30** (2018.01)

(52) Cooperative Patent Classification (CPC):
**F24F 11/88; G01H 3/00; G01K 11/24; G01M 9/06;**
**G01N 29/024; G01P 5/24;** F24F 2110/10;
F24F 2110/30

(86) International application number:
**PCT/JP2021/015329**

(87) International publication number:
**WO 2021/220799 (04.11.2021 Gazette 2021/44)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **30.04.2020   JP 2020080081**

(71) Applicant: **Daikin Industries, Ltd.**
**Osaka-shi, Osaka 530-0001 (JP)**

(72) Inventors:
• **HIEI Takehiko**
**Osaka-shi, Osaka 530-8323 (JP)**
• **OKUMOTO Mamoru**
**Osaka-shi, Osaka 530-8323 (JP)**
• **SHIGEMORI Kazuhisa**
**Osaka-shi, Osaka 530-8323 (JP)**

(74) Representative: **Goddar, Heinz J.**
**Boehmert & Boehmert**
**Anwaltspartnerschaft mbB**
**Pettenkoferstrasse 22**
**80336 München (DE)**

(54) **ENVIRONMENT DETECTION SYSTEM**

(57)   An environment detection system (1) detecting at least either the temperature distribution or the air velocity distribution in a target space (S) includes a sound wave transmitter (10) configured to transmit a detection sound wave to the target space (S), a sound wave receiver (20) configured to receive the detection sound wave transmitted by the sound wave transmitter (10), and a control unit (30) configured to control the sound wave transmitter (10). The control unit (30) executes first control to regulate at least either a volume or a frequency of the detection sound wave transmitted by the sound wave transmitter (10) so that a volume of the detection sound wave received by the sound wave receiver (20) is higher than or equal to a predetermined reference reception volume.

FIG.8

**Description**

TECHNICAL FIELD

The present disclosure relates to an environment detection system.

BACKGROUND ART

A method in which the temperature distribution in a space is measured by sound waves has been known in the art. Patent Document 1 discloses an environment-state measuring apparatus including a speaker that transmits sound waves into a space and a microphone that receives the sound waves sent by the speaker. This environment-state measuring apparatus measures the temperature distribution in a room based on the sound wave propagation time and the sound wave propagation distance from when the speaker transmits the sound wave to when the microphone receives the sound wave.

CITATION LIST

PATENT DOCUMENT

Patent Document 1: Japanese Unexamined Patent Publication No. H11-173925

SUMMARY OF THE INVENTION

TECHNICAL PROBLEM

A decrease in the accuracy of measurement of the sound wave propagation time from when the speaker transmits a sound wave to when the microphone receives the sound wave results in a decrease in the accuracy of measurement of each of the temperature distribution and air velocity distribution in a room. To increase the accuracy of measurement of the sound wave propagation time, the volume of the sound wave received by the microphone needs to be higher than or equal to a certain volume. However, in a known apparatus, no measures have been taken to enable the microphone to receive a sufficiently high volume of a sound wave.

It is an object of the present disclosure to improve the accuracy of measurement of each of the temperature distribution and the air velocity distribution in a space using sound waves.

SOLUTION TO THE PROBLEM

A first aspect of the present disclosure is directed to an environment detection system including: a sound wave transmitter (10) configured to transmit a detection sound wave to a target space (S); a sound wave receiver (20) configured to receive the detection sound wave transmitted by the sound wave transmitter (10); and a control unit (30) configured to control the sound wave transmitter (10). The environment detection system detects at least either a temperature distribution or an air velocity distribution in the target space (S). The control unit (30) executes first control to regulate at least either a volume or a frequency of the detection sound wave transmitted by the sound wave transmitter (10) so that a volume of the detection sound wave received by the sound wave receiver (20) is higher than or equal to a predetermined reference reception volume.

According to the first aspect, the first control allows the detection sound wave received by the sound wave receiver (20) to be higher than or equal to the reference reception volume. This can improve the accuracy of measurement of the sound wave propagation time. As a result, the accuracies of measurement of the temperature distribution and the air velocity distribution in the target space (S) can be improved.

A second aspect of the present disclosure is an embodiment of the first aspect. In the second aspect, the control unit (30) selectively performs a first operation and a second operation in the first control, the first operation is an operation of regulating the volume of the detection sound wave transmitted by the sound wave transmitter (10) so that the volume of the detection sound wave received by the sound wave receiver (20) is higher than or equal to the reference reception volume while the frequency of the detection sound wave transmitted by the sound wave transmitter (10) is kept constant, and the second operation is an operation of regulating the frequency of the detection sound wave transmitted by the sound wave transmitter (10) so that the volume of the detection sound wave received by the sound wave receiver (20) is higher than or equal to the reference reception volume while the volume of the detection sound wave transmitted by the sound wave transmitter (10) is kept at a reference transmission volume.

According to the second aspect, in the first operation, the volume of the detection sound wave transmitted by the sound wave transmitter (10) is regulated. In the second operation, the frequency of the detection sound wave transmitted by the sound wave transmitter (10) is regulated. Selectively executing the first operation and the second operation enables simple execution of the first control.

A third aspect of the present disclosure is an embodiment of the second aspect. In the third aspect, if a condition for switching is satisfied during the first operation, the control unit (30) executes the second operation, and the condition for switching is that the volume of the detection sound wave received by the sound wave receiver (20) is lower than the reference reception volume and the volume of the detection sound wave transmitted by the sound wave transmitter (10) has reached the predetermined reference transmission volume.

According to the third aspect, the second operation is executed when the condition for switching is satisfied during the first operation. If the volume of the sound wave received by the sound wave receiver (20) reaches the reference reception volume before the condition for switching is satisfied, the second operation is not executed. As can be seen, the first operation and the second operation can be selectively executed depending on whether or not the condition for switching is satisfied.

A fourth aspect of the present disclosure is an embodiment of the third aspect. In the fourth aspect, the first operation is an operation of increasing the volume of the detection sound wave transmitted by the sound wave transmitter (10), and the second operation is an operation of lowering the frequency of the detection sound wave transmitted by the sound wave transmitter (10).

According to the fourth aspect, the control unit (30) more preferentially performs the operation of increasing the volume of the detection sound wave transmitted by the sound wave transmitter (10) than the operation of lowering the frequency of the detection sound wave, during the first control. This can increase the frequency of the detection sound wave which has been received by the sound wave receiver (20) and the volume of which is higher than or equal to the reference reception volume to the highest frequency possible.

A fifth aspect of the present disclosure is an embodiment of any one of the first to fourth aspects. In the fifth aspect, the control unit (30) previously stores path information including a length of a sound wave propagation path from when the sound wave transmitter (10) transmits the detection sound wave to when the sound wave receiver (20) receives the detection sound wave, and sets the volume and frequency of the detection sound wave transmitted by the sound wave transmitter (10) at a start of the first control, based on the path information.

According to the fifth aspect, the control unit (30) sets the volume and frequency of the detection sound wave to be transmitted by the sound wave transmitter (10) at the start of the first control, using the path information previously stored. This can shorten the time required to regulate the detection sound wave transmitted by the sound wave transmitter (10).

A sixth aspect of the present disclosure is an embodiment of the fifth aspect. In the sixth aspect, the path information further includes reflection information about reflection of a sound wave in the sound wave propagation path.

According to the sixth aspect, the path information includes the reflection information on the sound wave in addition to the length of the sound wave propagation path. Examples of the reflection information include the number of reflections of the detection sound wave and the reflection coefficient of a reflection surface. The difference between each of the volume and the frequency of the detection sound wave transmitted by the sound wave transmitter (10) at the start of the first control and the corresponding one of the volume and the frequency of the detection sound wave transmitted by the sound wave transmitter (10) at the end of the first control can be reduced with increasing amount of the reflection information. Thus, according to this aspect, the time required to regulate the detection sound wave transmitted by the sound wave transmitter (10) can be further shortened.

BRIEF DESCRIPTION OF THE DRAWINGS

FIG. 1 is a perspective view illustrating a target space including an environment detection system according to an embodiment.
FIG. 2 is a piping system diagram illustrating a refrigerant circuit of an air conditioner.
FIG. 3 is a block diagram showing a configuration of the environment detection system.
FIG. 4 is a schematic diagram showing the temperature distribution in a target space and propagation paths of sound waves.
FIG. 5 illustrates a method for measuring the temperature distribution and air velocity distribution in the target space.
FIG. 6 is a flowchart showing processes performed by the environment detection system to measure the temperature distribution and air velocity distribution in the target space.
FIG. 7 is a flowchart showing processes for measuring a sound wave propagation time.
FIG. 8 is a flowchart showing a flow of first control.

DESCRIPTION OF EMBODIMENTS

Embodiments will be described below with reference to the drawings. The embodiments below are merely exemplary ones in nature, and are not intended to limit the scope, applications, or use of the present invention. Note that the terms in the following description which indicate directions, such as "upper," "top," "lower," "bottom," "right," and "left" refer to the directions shown in the drawings unless otherwise specified.

«Embodiment»

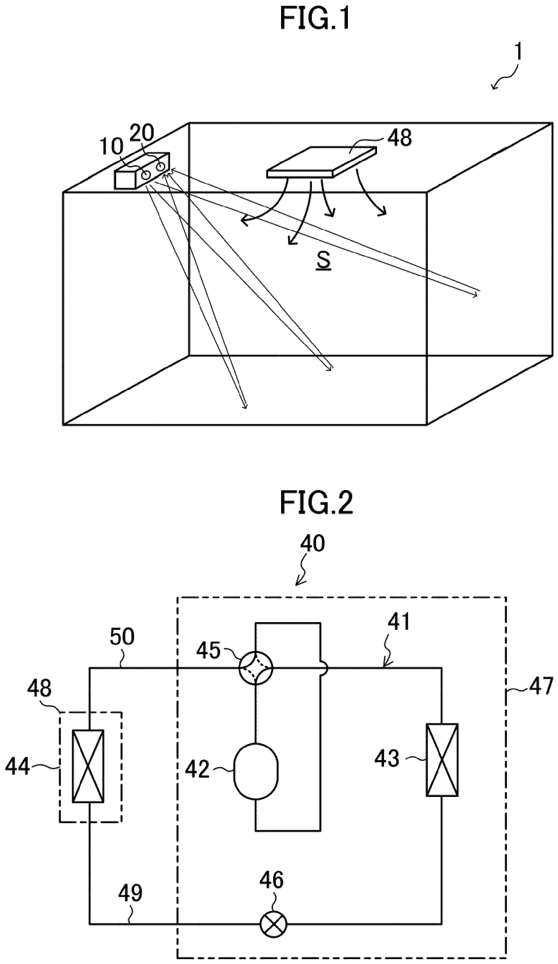

As illustrated in FIG. 1, an environment detection system (1) of this embodiment is a system that uses sound waves to measure the temperature distribution and air velocity distribution in an indoor space (S) where an air conditioner (40) is installed. The indoor space (S) corresponds to a target space (S) of the present disclosure. The indoor space (S) is formed by the ceiling surface, the wall surfaces, and the floor surface. A speaker (10) and a microphone (20) are arranged near the ceiling of the indoor space (S). The speaker (10) is configured to transmit detection sound waves to the indoor space (S). The microphone (20) is configured to receive the detection sound waves.

<Air Conditioner>

As illustrated in FIG. 2, the air conditioner (40) includes an indoor unit (48) and an outdoor unit (47). The indoor unit (48) of the air conditioner (40) is installed near the center of the ceiling surface of the indoor space (S). The indoor unit (48) draws air in the indoor space (S), and blows conditioned air into the indoor space (S) (the thick arrows in FIG. 1).
The air conditioner (40) includes a refrigerant circuit (41). The refrigerant circuit (41) is formed by connecting the outdoor unit (47) and the indoor unit (48) together through a liquid communication pipe (49) and a gas communication pipe (50). The refrigerant circuit (41) includes a compressor (42), an outdoor heat exchanger (43), an expansion valve (46), an indoor heat exchanger (44), and a switching valve (45). The compressor (42), the outdoor heat exchanger (43), and the expansion valve (46) are housed in the outdoor unit (47). The indoor heat exchanger (44) is housed in the indoor unit (48). The air conditioner (40) performs a refrigeration cycle operation in which a refrigerant circulates to cool and heat air in the indoor space (S).
Specifically, the air conditioner performs a cooling operation and a heating operation. In the cooling operation, the air conditioner (40) performs a refrigeration cycle in which the outdoor heat exchanger (43) functions as a condenser, and the indoor heat exchanger (44) functions as an evaporator, thereby cooling air in the indoor space (S). In contrast, in the heating operation, the air conditioner (40) performs a refrigeration cycle operation in which the indoor heat exchanger (44) functions as a condenser, and the outdoor heat exchanger (43) functions as an evaporator, thereby heating air in the indoor space (S).

<Environment Detection System>

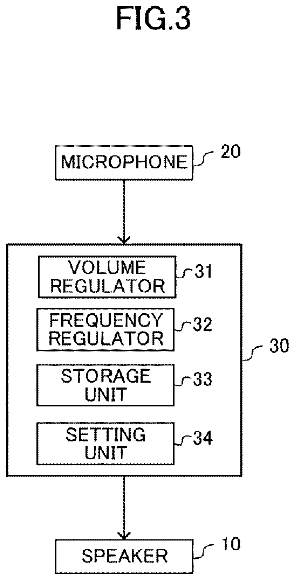

As shown in FIG. 1, the environment detection system (1) includes a speaker (10), a microphone (20), and a controller (30). The environment detection system (1) measures the temperature distribution and air velocity distribution in the indoor space (S), based on the time during which, and the distance over which, a detection sound wave propagates, from when the speaker (10) transmits the detection sound wave to when the microphone receives the detection sound wave.
The speaker (10) is a sound wave transmitter. The speaker (10) transmits detection sound waves. The speaker (10) transmits the detection sound waves in various directions in the indoor space (S). The plurality of detection sound waves transmitted from the speaker (10) propagate through the indoor space. Some of the detection sound waves are reflected off the floor surface, the wall surface, and other surfaces.
The microphone (20) is a sound wave receiver. The microphone (20) receives the detection sound waves transmitted by the speaker (10), and generates, and outputs, electric signals corresponding to the received detection sound waves. The microphone (20) directly receives the detection sound waves from the speaker (10), and receives the detection sound waves reflected off the floor surface and the wall surface. FIG. 1 shows that the microphone (20) has received the detection sound waves transmitted from the speaker (10) and reflected off the floor surface and the wall surface.
As shown in FIG. 3, the controller (30) corresponds to a control unit (30) of the present disclosure. The controller (30) includes a microcomputer mounted on a control board and a memory device (specifically, a semiconductor memory) that stores software for operating the microcomputer. The controller (30) controls the speaker based on an input signal input by an operator and a detection signal from the microphone (20). The controller (30) is connected to the speaker (10) and the microphone (20) via communication lines.
The controller (30) includes a volume regulator (31), a frequency regulator (32), a storage unit (33), and a setting unit (34).

The volume regulator (31) regulates the volume of the detection sound wave transmitted from the speaker (10), based on the volume of the detection sound wave detected by the microphone (20).

The frequency regulator (32) regulates the frequency of the detection sound wave transmitted from the speaker (10), based on the frequency of the detection sound wave detected by the microphone (20).

The storage unit (33) stores path information, a reference transmission volume, and a reference reception volume. The storage unit (33) stores the path information on each of the directions in which the speaker (10) transmits the detection sound waves. In other words, the storage unit (33) associates each of the directions in which the speaker (10) transmits the detection sound waves with the path information about the direction to store the path information.

The path information includes the lengths of sound wave propagation paths (distance information), and reflection information about reflection of sound waves in the sound wave propagation path, from when the speaker (10) transmits the detection sound waves to when the microphone (20) receives the detection sound waves. The path information is previously recorded in the storage unit (33).

The distance information indicates the length of the propagation path of each of the detection sound waves from when the detection sound wave is transmitted from the speaker (10) to when the detection sound wave reaches the microphone (20). The plurality of detection sound waves transmitted from the speaker (10) at different angles travel through different propagation paths. This causes the propagation paths of the detection sound waves to have different lengths.

The reflection information includes the number of reflections of each detection sound wave off the floor surface and the wall surface of the indoor space (S) in the propagation path of the detection sound wave, and the reflection coefficients of the floor surface, the wall surface, and any other surfaces.

The reference transmission volume is a predetermined reference volume of the detection sound wave transmitted by the speaker (10). The reference transmission volume is set at an optional volume. Here, the reference transmission volume is the maximum volume of the detection sound wave that can be transmitted by the speaker (10).

The reference reception volume is a predetermined reference volume of the detection sound wave received by the microphone (20). The propagation time of the detection sound wave is calculated using the detection sound wave with a volume higher than or equal to the reference reception volume. The reference reception volume is set at an optional volume.

The setting unit (34) divides the indoor space (S) into a plurality of regions $A_n$ (n = 1, 2, ... n). The setting unit (34) sets the volume and frequency of the detection sound wave to be transmitted by the speaker (10) at the start of first control to be described later, based on the path information previously stored in the storage unit (33).

<Measurement of Temperature Distribution and Air Velocity Distribution>

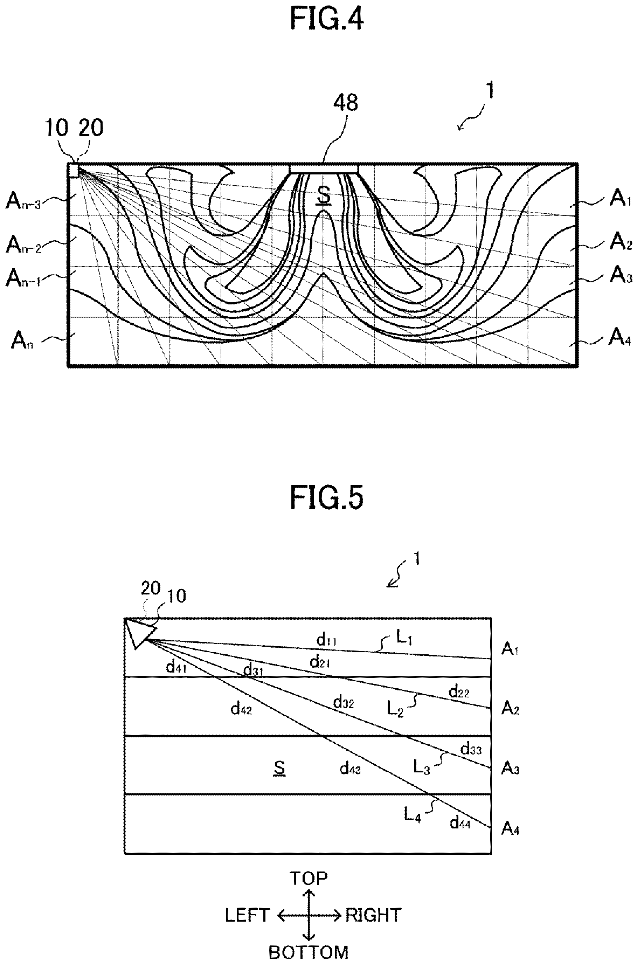

While air in the indoor space (S) is conditioned by the air conditioner (40), the temperature and air velocity in the indoor space (S) are not uniform. In FIG. 4, the temperature distribution in the indoor space (S) observed while the air conditioner is performing the heating operation is shown by the contour lines. The temperature of the air blown out of an outlet of the air conditioner (40) is highest, and the temperature decreases gradually with increasing distance from the air conditioner (40).

One or more detection sound waves transmitted from the speaker (10) pass through the respective regions $A_n$ (n = 1, 2, ... n) of the indoor space (S). If the temperature and air velocity in each of the regions $A_n$ is obtained based on the distance over which, and the time during which, the detection sound wave passing through the region $A_n$ propagates, the temperature distribution and air velocity distribution in the entire indoor space (S) can be obtained.

A method for measuring the temperature distribution and air velocity distribution in the indoor space (S) will be described below. For ease of explanation, reference is made to FIG. 5.

FIG. 5 illustrates a horizontal cross section of the indoor space (S). The indoor space (S) is divided into four regions (first to fourth regions ($A_1$ to $A_4$)) having different temperatures in the top-to-bottom direction.

The speaker (10) and the microphone (20) are installed on an upper portion of the left wall surface of the indoor space (S). The plurality of detection sound waves transmitted from the speaker (10) propagate toward the right side surface. Here, the propagation path of the detection sound wave that has reached a portion of the right wall surface in the first region $A_1$ is referred to as a "first propagation path Li." The microphone (20) receives the detection sound wave that has reciprocated through the first propagation path $L_1$.

Likewise, the propagation path corresponding to the region $A_2$ is referred to as a "second propagation path $L_2$," the propagation path corresponding to the region $A_3$ is referred to as a "third propagation path $L_3$," and the propagation path corresponding to the region $A_4$ is referred to as a "fourth propagation path $L_4$." The microphone (20) receives the detection sound wave that has reciprocated through each of the second to fourth propagation paths ($L_2$ to $L_4$).

Here, the distance $D_m$ (m = 1 to 4) of each of the propagation paths $L_m$ (m = 1 to 4) is the sum of the distances $d_{mn}$ over which the detection sound wave propagating through the propagation path $L_m$ passes through the associated

regions $A_n$ (n = 1 to 4). Specifically, a first distance $D_1$ of the first propagation path $L_1$ is expressed by $d_{11}$. A second distance $D_2$ of the second propagation path $L_2$ is expressed by $d_{21} + d_{22}$. A third distance $D_3$ of the third propagation path $L_3$ is expressed by $d_{31} + d_{32} + d_{33}$. A fourth distance $D_4$ of the fourth propagation path $L_4$ is expressed by $d_{41} + d_{42} + d_{43} + d_{44}$.

The temperature distribution in the indoor space (S) is obtained as follows. The following relational expression [Formula 1] is satisfied:

[Formula 1]

$$v_n = 331.5 + \alpha \times t_n$$

where $v_n$ (n = 1 to 4) represents the propagation velocity (m/s) of the detection sound wave propagating through each region $A_n$, and $t_n$ (n = 1 to 4) represents the temperature (deg C) of the region An.

In [Formula 1], the value "331.5" (m/s) represents the sound velocity, and $\alpha$ represents a predetermined constant. The propagation time $T_n$, the propagation distance $d_{mn}$, and the propagation velocity $v_n$ of a detection sound wave satisfy the following relational expression [Formula 2]:

[Formula 2]

$$
\begin{bmatrix} T_1 \\ T_2 \\ T_3 \\ T_4 \end{bmatrix} = 2 \begin{bmatrix} d_{11} & d_{12} & d_{13} & d_{14} \\ d_{21} & d_{22} & d_{23} & d_{24} \\ d_{31} & d_{32} & d_{33} & d_{34} \\ d_{41} & d_{42} & d_{43} & d_{44} \end{bmatrix} \begin{bmatrix} 1/v_1 \\ 1/v_2 \\ 1/v_3 \\ 1/v_4 \end{bmatrix}
$$

where the propagation time $T_n$ (n = 1 to 4) represents the time during which the detection sound wave propagating through each propagation path $L_n$ (n = 1 to 4) reciprocates.

The propagation velocities $v_n$ through the regions $A_n$ can be obtained by calculating the system of simultaneous equations defined as [Formula 2] using the method of least squares. The temperatures $t_n$ in the regions $A_n$ can be obtained by the propagation velocities $v_n$ and [Formula 1]. In [Formula 2], zero is entered into the propagation distance $d_{mn}$ (e.g., $d_{14}$ and $d_{24}$) of each of the regions that is not shown in FIG. 5.

Next, the air velocity distribution in the indoor space (S) is obtained as follows. The airflow velocity (m/s) through each of the regions $A_n$ is denoted by $u_n$ (n = 1 to 4). While the sound wave propagates forward through each propagation path $L_n$, the airflow forms a tailwind that follows the propagating sound wave. On the other hand, while the sound wave returns therethrough, the airflow forms a head wind that opposes the propagating sound wave. While the airflow forms a tailwind, the propagation velocity of the detection sound wave increases by the airflow velocity $u_n$. On the other hand, while the airflow forms a head wind, the detection propagation velocity decreases by the airflow velocity $u_n$. Thus, the velocity $v_{na}$ during forward propagation of the sound wave (in a situation where the airflow forms a tailwind) and the velocity $v_{nb}$ during return propagation (in a situation where the airflow forms a head wind) satisfy the relational expressions [Formula 3] and [Formula 4], respectively.

[Formula 3]

$$v_{na} = 331.5 + \alpha \times t_n + u_n$$

[Formula 4]

$$v_{nb} = 331.5 + \alpha \times t_n - u_n$$

The propagation time $T_n$, the propagation distance $d_{mn}$, and the propagation velocity $v_n$ of a detection sound wave satisfy the following relational expression [Formula 5]:

[Formula 5]

$$
\begin{bmatrix} T_1 \\ T_2 \\ T_3 \\ T_4 \end{bmatrix} = \begin{bmatrix} d_{11} & d_{12} & d_{13} & d_{14} \\ d_{21} & d_{22} & d_{23} & d_{24} \\ d_{31} & d_{32} & d_{33} & d_{34} \\ d_{41} & d_{42} & d_{43} & d_{44} \end{bmatrix} \begin{bmatrix} 1/v_{1a} \\ 1/v_{2a} \\ 1/v_{3a} \\ 1/v_{4a} \end{bmatrix} + \begin{bmatrix} d_{11} & d_{12} & d_{13} & d_{14} \\ d_{21} & d_{22} & d_{23} & d_{24} \\ d_{31} & d_{32} & d_{33} & d_{34} \\ d_{41} & d_{42} & d_{43} & d_{44} \end{bmatrix} \begin{bmatrix} 1/v_{1b} \\ 1/v_{2b} \\ 1/v_{3b} \\ 1/v_{4b} \end{bmatrix}
$$

where the propagation time $T_n$ (n = 1 to 4) represents the time during which the detection sound wave propagating through each propagation path $L_n$ (n = 1 to 4) reciprocates.

Addition of another speaker (10) and another microphone (20) or any other method allows the left term (forward propagation) and right term (return propagation) of the right side of [Formula 5] to be separately measured, thereby calculating the values $v_{na}$ and $v_{nb}$ from the system of simultaneous equations defined as [Formula 5]. Thus, the airflow velocity $u_n$ can be obtained from the difference between the values $v_{na}$ and $v_{nb}$.

<Process for Measuring Temperature Distribution and Velocity Distribution>

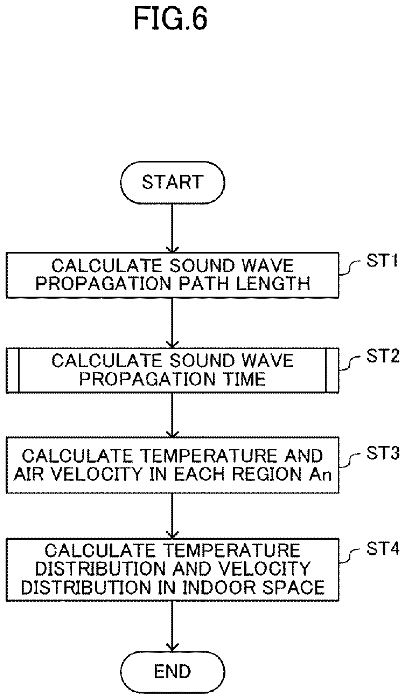

Next, a process in which the environment detection system (1) measures the temperature distribution and the velocity distribution in the indoor space (S) will be described with reference to FIG. 6.

In step ST1, the controller (30) acquires distance information on a plurality of detection sound waves propagating through the indoor space (S) on a region An-by-region $A_n$ basis, from the path information stored in the storage unit (33).

In step ST2, the controller (30) measures the amount of time elapsed between the instant when the speaker (10) transmits a detection sound wave and the instant when the microphone (20) receives the detection sound wave. This amount of time elapsed is used as the propagation time of the detection sound wave.

In step ST3, the controller (30) calculates the temperature and air velocity in each of the regions $A_n$, based on the propagation distance of the detection sound wave which passes through the region $A_n$ which is acquired in step ST1, and the propagation time of the detection sound wave calculated in step ST2. The controller (30) records the calculated temperature and air velocity in the region $A_n$ in the storage unit (33).

In step ST4, the controller (30) creates the temperature distribution and velocity distribution in the indoor space (S), based on the temperature and velocity in each region $A_n$ that have been calculated in step ST3.

<Measurement of Detection Sound Wave Propagation Distance>

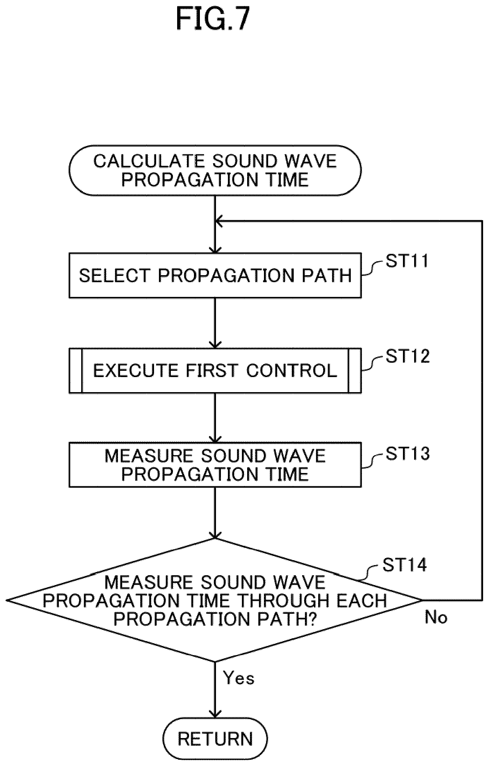

Next, a process in which the controller (30) measures a sound wave propagation time in step ST2 will be described with reference to FIG. 7.

In step ST11, the controller (30) selects a propagation path $L_n$ from the plurality of propagation paths.

In step ST12, the controller (30) executes first control. The first control is intended to regulate the volume or the volume and frequency of the detection sound wave transmitted from the speaker (10) so that the volume of the detection sound wave received by the microphone (20) is higher than or equal to the predetermined reference reception volume. The first control allows the microphone (20) to receive the detection sound wave propagating through the propagation path $L_n$ selected in step ST11 for the first control at a volume higher than or equal to the reference reception volume.

In step ST13, the controller (30) measures the propagation time of the detection sound wave reciprocating through the propagation path $L_n$.

In step ST14, the controller (30) determines whether or not the propagation times of the detection sound waves reciprocating through all of the propagation paths $L_n$ (n = 1, 2, ..., n) have been measured. If a determination is made that the detection sound waves through all of the propagation paths Ln have been measured, the process proceeds to step ST3. If a determination is made that the detection sound waves through all of the propagation paths Ln have not been measured, the process proceeds to step ST11.

As can be seen, in step ST2 of FIG. 6, the controller (30) regulates the volume and frequency of the detection sound wave transmitted by the speaker (10) so that the volume of each of the detection sound waves corresponding to the plurality of propagation paths $L_n$ (n = 1, 2, ..., n) and received by the microphone (20) is higher than or equal to the predetermined reference reception volume.

<First Control>

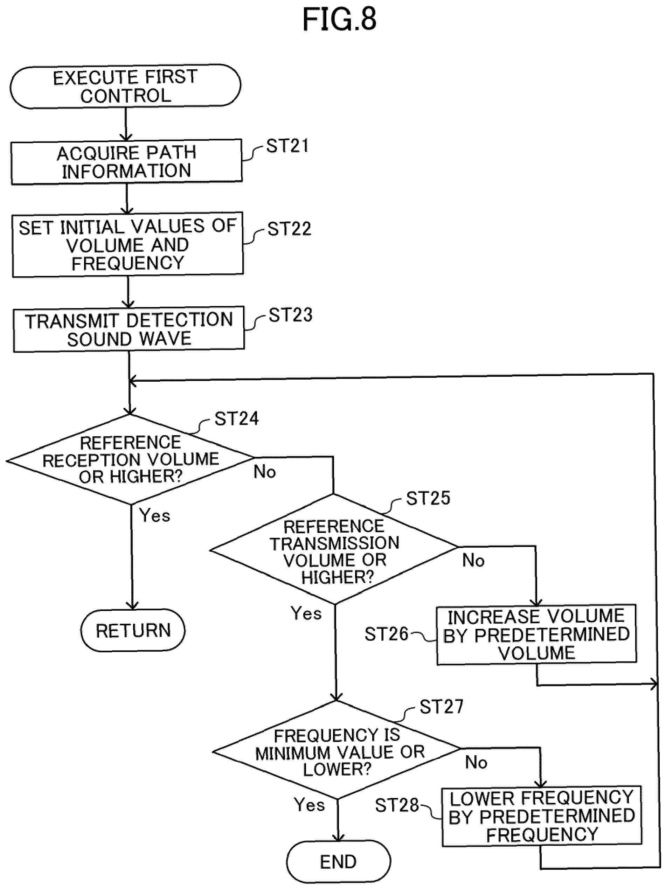

Next, a process to be performed by the controller (30) during the first control in step ST12 will be described with reference to FIG. 8. In the first control, the controller (30) selectively performs a first operation and a second operation to be described later.

In step ST21, the controller (30) acquires the path information that relates to the propagation path $L_n$ selected in step ST11 and that is stored in the storage unit (33). The path information acquired here includes the distance information and the reflection information.

In step ST22, the controller (30) sets initial values of the volume and frequency of the detection sound wave to be transmitted by the speaker (10) at the start of the first control, based on the path information acquired in step ST21. In general, the amount of attenuation of the sound wave increases with increasing propagation distance, increasing number of reflections, and decreasing coefficient of each reflection. Thus, the initial value of the volume of the detection sound wave is set to be relatively high, and the initial value of the frequency of the detection sound wave is set to be relatively low. In contrast, the amount of attenuation of the sound wave decreases with decreasing propagation distance, decreasing number of reflections, and increasing coefficient of each reflection. Thus, the initial value of the volume of the detection sound wave is set to be relatively low, and the initial value of the frequency of the detection sound wave is set to be relatively high.

In step ST23, the controller (30) instructs the speaker (10) to transmit a detection sound wave at a volume and a frequency equal to the respective initial values set in step ST22. The speaker (10) instructed by the controller (30) transmits a detection sound wave.

In step ST24, the controller (30) determines whether or not the volume of the detection sound wave received by the microphone (20) is higher than or equal to the reference reception volume. If the controller (30) determines that the volume of the detection sound wave received by the microphone is higher than or equal to the reference reception volume, the first control is ended. If the controller (30) determines that the volume of the detection sound wave received by the microphone is not higher than or equal to the reference reception volume, the process in step ST25 is performed.

In step ST25, the controller (30) determines whether or not the volume of the detection sound wave received by the microphone (20) has reached the reference transmission volume (in this embodiment, the maximum volume). If the controller (30) determines that the volume of the detection sound wave received by the microphone (20) has reached the reference transmission volume (in this embodiment, the maximum volume), the process in step ST27 is performed. If the controller (30) determines that the volume of the detection sound wave received by the microphone (20) has not reached the reference transmission volume (in this embodiment, the maximum volume), the process in step ST26 is performed.

In step ST26, the controller (30) increases the volume of the detection sound wave transmitted by the speaker (10) by a predetermined volume while keeping the frequency of the detection sound wave transmitted by the speaker (10) constant at the value set in step ST22 (the initial value). Thereafter, the controller (30) performs the process in step ST24. As can be seen, the controller (30) performs the first operation to regulate the volume of the detection sound wave transmitted by the speaker (10) so that the volume of the detection sound wave received by the microphone (20) is higher than or equal to the reference reception volume.

In step ST27, the controller (30) determines whether or not the frequency of the detection sound wave transmitted by the speaker (10) is lower than or equal to the minimum value. If the frequency of the detection sound wave transmitted by the speaker (10) has already reached its minimum value, the frequency of the detection sound wave transmitted by the speaker (10) cannot be lowered. Thus, in this case, the controller (30) ends the first control. On the other hand, if the controller (30) determines that the frequency of the detection sound wave transmitted by the speaker (10) is not lower than or equal to the minimum value, the process in step ST28 is performed.

In step ST28, the controller (30) lowers the frequency of the detection sound wave transmitted by the speaker (10) by a predetermined frequency while keeping the volume of the detection sound wave transmitted by the speaker (10) at the reference transmission volume (in this case, the maximum volume). Thereafter, the controller (30) performs the process in step ST24. As can be seen, the controller (30) performs the second operation to regulate the frequency of the detection sound wave transmitted by the speaker (10) so that the volume of the detection sound wave received by the microphone (20) is higher than or equal to the reference reception volume.

As can be seen, in the first control, the controller (30) executes the first operation in step ST26. If, during the first operation, a condition for switching is satisfied, the controller (30) executes the second operation in step ST28. The condition for switching is that a determination is made in step ST24 that the volume of the sound wave received by the microphone (20) is lower than the reference reception volume and a determination is made in step ST25 that the volume of the detection sound wave transmitted by the speaker (10) has reached the predetermined reference transmission volume (in this embodiment, the maximum volume).

<Feature (1) of Embodiment

The environment detection system (1) according to the embodiment includes the speaker (10) (sound wave transmitter) configured to transmit a detection sound wave to an indoor space (S) (target space), the microphone (20) (sound wave receiver) configured to receive the detection sound wave transmitted by the speaker (10), and the controller (30) (control unit) configured to control the speaker (10). The controller (30) executes the first control to regulate at least either the volume or frequency of the detection sound wave transmitted by the speaker (10) so that the volume of the detection sound wave received by the microphone (20) is higher than or equal to the predetermined reference reception volume.

Here, to increase the accuracy of measurement of each of the temperature distribution and air velocity distribution in an indoor space using detection sound waves, the propagation distance and propagation time of a detection sound wave from when a speaker transmits the detection sound wave to when a microphone receives the detection sound wave need to be more accurately measured. To satisfy the need, the speaker needs to transmit a sound wave having a relatively high frequency to maintain a relatively high resolution of the sound wave propagation time.

However, while the resolution of the sound wave propagation time increases with increasing frequency of the sound wave, the amount of attenuation increases with increasing propagation distance. A larger amount of attenuation leads to a decrease in the resolution of the propagation time of the detection sound wave received by the microphone. To address this problem, the detection sound wave transmitted by the speaker needs to be regulated so that the volume of the detection sound wave received by the microphone is higher than or equal to the volume serving as a reference relative to which the sound wave propagation time is measured, and so as to have a frequency of the detection sound wave by which the amount of attenuation is minimized. However, studies to satisfy the need have not been made.

To satisfy the need, according to the feature (1) of the embodiment, the first control allows the volume of the detection sound wave received by the microphone (20) to be higher than or equal to the reference reception volume. This can improve the accuracy of measurement of the sound wave propagation time during which the detection sound wave propagates from the speaker (10) to the microphone (20). As a result, the accuracies of measurement of the temperature distribution and air velocity distribution in the target space (S) using detection sound waves can be improved, and the reliability with which the temperature distribution and the air velocity distribution are measured is improved.

<Feature (2) of Embodiment

In the environment detection system (1) of the embodiment, the first control is intended to selectively perform the first operation and the second operation. The first operation is an operation of regulating the volume of the detection sound wave transmitted by the speaker (10) so that the volume of the detection sound wave received by the microphone (20) is higher than or equal to the reference reception volume while the frequency of the detection sound wave transmitted by the speaker (10) is kept constant. The second operation is an operation of regulating the frequency of the detection sound wave transmitted by the speaker (10) so that the volume of the detection sound wave received by the microphone (20) is higher than or equal to the reference reception volume while the volume of the detection sound wave transmitted by the speaker (10) is kept at the reference transmission volume.

According to the feature (2) of the embodiment, in the first operation, the volume of the detection sound wave transmitted by the speaker (10) is regulated. In the second operation, the frequency of the detection sound wave transmitted by the speaker (10) is regulated. Selectively executing the first operation and the second operation as described above eliminates the need for simultaneously regulating the volume and frequency of the speaker (10). This enables simple execution of the first control.

<Feature (3) of Embodiment>

In the environment detection system (1) of the embodiment, the controller (30) executes the second operation when the condition for switching is satisfied during the first operation. The condition for switching is that the volume of the detection sound wave transmitted by the speaker (10) has reached the predetermined reference transmission volume and the volume of the sound wave received by the microphone (20) is lower than the reference reception volume.

According to the feature (3) of the embodiment, the second operation is executed when the condition for switching is satisfied during the first operation. If the volume of the sound wave received by the sound wave receiver (20) reaches the reference reception volume before the condition for switching is satisfied, the second operation is not executed. As can be seen, the first operation and the second operation can be selectively executed depending on whether or not the condition for switching is satisfied.

<Feature (4) of Embodiment>

In the environment detection system (1) according to the embodiment, the first operation is an operation of increasing the volume of the detection sound wave transmitted by the speaker (10), and the second operation is an operation of lowering the frequency of the detection sound wave transmitted by the speaker (10).

According to the feature (4) of the embodiment, the control unit (30) more preferentially performs the operation of increasing the volume of the detection sound wave transmitted by the sound wave transmitter (10) than the operation of lowering the frequency of the detection sound wave, during the first control. This can increase the frequency of the detection sound wave which has been received by the sound wave receiver (20) and the volume of which is higher than or equal to the reference reception volume to the highest frequency possible.

In addition, in the first operation, the controller (30) increases the volume of the detection sound wave transmitted by the speaker (10) while keeping the frequency of the sound wave at its initial value. When the volume of the sound wave reaches the reference reception volume before the condition for switching is satisfied, the sound wave propagation time is measured with the initial value of the frequency. Even if the condition for switching is satisfied, the controller (30) lowers the frequency of the detection sound wave transmitted by the speaker (10) in the second operation. This allows the sound wave propagation time to be measured with the highest frequency possible. As can be seen, the controller (30) increases the volume of the speaker (10) in the first operation, and when the condition for switching is satisfied, the controller (30) reduces the frequency of the speaker in the second operation. This can increase the frequency of the detection sound wave the volume of which is higher than or equal to the reference reception volume to a frequency as high as possible. The higher the frequency is, the higher the resolution of the sound wave propagation time is. This can increase the accuracy of measurement of the sound wave propagation time.

In addition, there is no need to repeatedly measure the sound wave propagation time with a plurality of frequencies. This can shorten the measuring time. Setting the initial value at a relatively high frequency can increase the accuracy of measurement of the sound wave propagation time.

<Feature (5) of Embodiment>

In the environment detection system (1) according to the embodiment, the path information including the length of the sound wave propagation path from when the speaker (10) transmits the detection sound wave to when the microphone (20) receives the detection sound wave is previously stored, and the volume and frequency of the detection sound wave transmitted by the speaker (10) at the start of the first control are set based on the path information.

According to the feature (5) of the embodiment, regulating the volume and frequency of the detection sound wave transmitted by the speaker (10) based on the path information allows the volume of the detection sound wave received by the microphone (20) to reach the reference reception volume earlier after the start of the first control than if the path information is not used. This is because the volume and frequency of the detection sound wave transmitted by the speaker (10) so as to be received at the reference reception volume can be estimated to some extent, based on the path information. This can shorten the measurement of the sound wave propagation time, and can shorten the measurement of the temperature distribution and velocity distribution in the target space.

<Feature (6) of Embodiment>

In the environment detection system (1) according to the embodiment, the path information further includes the reflection information about reflection of the sound wave in the sound wave propagation path.

According to the feature (6) of the embodiment, the path information includes the reflection information on the sound waves (the number of the reflections and the reflection coefficients) in addition to the length of the sound wave propagation path. This can improve the accuracy of the measurement of the sound wave propagation time, and can improve the accuracies of the measurement of the temperature distribution and velocity distribution in the target space as well.

«Other Embodiments»

The environment detection system (1) of the present disclosure may be a system that detects either the temperature distribution or the air velocity distribution.

In the environment detection system (1) of the present disclosure, the volume of the detection sound wave transmitted by the speaker (10) under the first control may be equal to or higher than the reference reception volume received by the microphone (20). The first control may be intended to regulate either the volume or frequency of the detection sound wave transmitted by the speaker (10).

In this embodiment, the path information stored by the storage unit (33) of the controller (30) is not limited to the distance information and the reflection information. The path information merely needs to be information for use to set the volume and frequency of the detection sound wave transmitted by the speaker (10) at the start of the first control, and includes other types of information about the sound wave propagation path.

In this embodiment, the controller (30) may omit the setting of the initial values of the volume and frequency of the detection sound wave in step ST22. In this case, the initial values may be previously set when the environment detection system (1) is designed. Alternatively, the initial values may be set by an operator or any other person when the environment detection system is installed.

In the environment detection system (1) of the present disclosure, the location at which the speaker (10) and the microphone (20) are installed is not limited to the ceiling of the indoor space (S). The speaker (10) and the microphone (20) may be installed on the wall surface or floor surface of the indoor space (S).

In the environment detection system (1) of the present disclosure, the speaker (10) and the microphone (20) may be separately installed at different locations in the indoor space (S).

In the environment detection system (1) of the present disclosure, the number of the speaker(s) (10) and the number of the microphone(s) (20) in the indoor space (S) are not each limited to one, and may be two or more.

In the environment detection system (1) of the present disclosure, the speaker (10) and the microphone (20) may be provided in the indoor unit (48) of the air conditioner (40).

In the environment detection system (1) of the present disclosure, the air conditioner (40) provided in the indoor space (S) may be a wall-mounted air conditioner or a floor standing air conditioner.

While the embodiments and variations thereof have been described above, it will be understood that various changes in form and details may be made without departing from the spirit and scope of the claims. The embodiments and the variations thereof may be combined and replaced with each other without deteriorating intended functions of the present disclosure. The expressions of "first," "second," ... described above are used to distinguish the terms to which these expressions are given, and do not limit the number and order of the terms.

INDUSTRIAL APPLICABILITY

As can be seen from the foregoing description, the present disclosure is useful for an environment detection system.

DESCRIPTION OF REFERENCE CHARACTERS

S    Indoor Space (Target Space)
10    Speaker (Sound Wave Transmitter)
20    Microphone (Sound Wave Receiver)
30    Controller (Control Unit)

**Claims**

1.  An environment detection system, comprising:

    a sound wave transmitter (10) configured to transmit a detection sound wave to a target space (S);
    a sound wave receiver (20) configured to receive the detection sound wave transmitted by the sound wave transmitter (10); and
    a control unit (30) configured to control the sound wave transmitter (10), wherein
    the environment detection system detects at least either a temperature distribution or an air velocity distribution in the target space (S),
    the control unit (30) executes first control to regulate at least either a volume or a frequency of the detection sound wave transmitted by the sound wave transmitter (10) so that a volume of the detection sound wave received by the sound wave receiver (20) is higher than or equal to a predetermined reference reception volume.

2.  The environment detection system of claim 1, wherein

    the control unit (30) selectively performs a first operation and a second operation in the first control,
    the first operation is an operation of regulating the volume of the detection sound wave transmitted by the sound wave transmitter (10) so that the volume of the detection sound wave received by the sound wave receiver (20) is higher than or equal to the reference reception volume while the frequency of the detection sound wave transmitted by the sound wave transmitter (10) is kept constant, and

the second operation is an operation of regulating the frequency of the detection sound wave transmitted by the sound wave transmitter (10) so that the volume of the detection sound wave received by the sound wave receiver (20) is higher than or equal to the reference reception volume while the volume of the detection sound wave transmitted by the sound wave transmitter (10) is kept at a reference transmission volume.

3. The environment detection system of claim 2, wherein

if a condition for switching is satisfied during the first operation, the control unit (30) executes the second operation, and

the condition for switching is that the volume of the detection sound wave received by the sound wave receiver (20) is lower than the reference reception volume and the volume of the detection sound wave transmitted by the sound wave transmitter (10) has reached the predetermined reference transmission volume.

4. The environment detection system of claim 3, wherein

the first operation is an operation of increasing the volume of the detection sound wave transmitted by the sound wave transmitter (10), and

the second operation is an operation of lowering the frequency of the detection sound wave transmitted by the sound wave transmitter (10).

5. The environment detection system of any one of claims 1 to 4, wherein the control unit (30) previously stores path information including a length of a sound wave propagation path from when the sound wave transmitter (10) transmits the detection sound wave to when the sound wave receiver (20) receives the detection sound wave, and sets the volume and frequency of the detection sound wave transmitted by the sound wave transmitter (10) at a start of the first control, based on the path information.

6. The environment detection system of claim 5, wherein

the path information further includes reflection information about reflection of a sound wave in the sound wave propagation path.

# FIG.1

# FIG.2

# FIG.3

MICROPHONE — 20

VOLUME REGULATOR — 31

FREQUENCY REGULATOR — 32

STORAGE UNIT — 33

SETTING UNIT — 34

— 30

SPEAKER — 10

# FIG.4

# FIG.5

# FIG.6

```
        ┌─────────────┐
        │    START    │
        └──────┬──────┘
               │
               ▼
┌────────────────────────────┐
│   CALCULATE SOUND WAVE      │ ─── ST1
│  PROPAGATION PATH LENGTH    │
└──────────────┬─────────────┘
               │
               ▼
┌────────────────────────────┐
│   CALCULATE SOUND WAVE      │ ─── ST2
│     PROPAGATION TIME        │
└──────────────┬─────────────┘
               │
               ▼
┌────────────────────────────┐
│  CALCULATE TEMPERATURE AND  │ ─── ST3
│ AIR VELOCITY IN EACH REGION An │
└──────────────┬─────────────┘
               │
               ▼
┌────────────────────────────┐
│   CALCULATE TEMPERATURE     │ ─── ST4
│  DISTRIBUTION AND VELOCITY  │
│ DISTRIBUTION IN INDOOR SPACE │
└──────────────┬─────────────┘
               │
               ▼
        ┌─────────────┐
        │     END     │
        └─────────────┘
```

# FIG.7

```
        CALCULATE SOUND WAVE
          PROPAGATION TIME

        SELECT PROPAGATION PATH        ST11

        EXECUTE FIRST CONTROL          ST12

         MEASURE SOUND WAVE            ST13
          PROPAGATION TIME

         MEASURE SOUND WAVE            ST14
  PROPAGATION TIME THROUGH EACH
         PROPAGATION PATH?        No

              Yes

              RETURN
```

# FIG.8

EXECUTE FIRST
CONTROL

ACQUIRE PATH
INFORMATION —ST21

SET INITIAL VALUES OF
VOLUME AND
FREQUENCY —ST22

TRANSMIT DETECTION
SOUND WAVE —ST23

ST24
REFERENCE
RECEPTION VOLUME
OR HIGHER?

No

Yes

RETURN

ST25
REFERENCE
TRANSMISSION
VOLUME OR
HIGHER?

No

Yes

ST26— INCREASE VOLUME
BY PREDETERMINED
VOLUME

ST27
FREQUENCY IS
MINIMUM VALUE OR
LOWER?

No

Yes

ST28— LOWER FREQUENCY
BY PREDETERMINED
FREQUENCY

END

| **INTERNATIONAL SEARCH REPORT** | International application No. |
| | **PCT/JP2021/015329** |

| A. | CLASSIFICATION OF SUBJECT MATTER |
| --- | --- |

**G01K 11/24**(2006.01)i; **G01N 29/024**(2006.01)i; **G01P 5/24**(2006.01)i; *F24F 11/88*(2018.01)n; *F24F 110/10*(2018.01)n; *F24F 110/30*(2018.01)n

FI: G01K11/24; G01P5/24 B; G01N29/024; F24F11/88; F24F110:10; F24F110:30

According to International Patent Classification (IPC) or to both national classification and IPC

| B. | FIELDS SEARCHED |
| --- | --- |

Minimum documentation searched (classification system followed by classification symbols)

G01K11/22-11/26; G01P5/24; G01N29/024; G01S15/00-15/96; F24F11/88; F24F110/10; F24F110/30

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | JP 2012-26654 A (DAIKIN INDUSTRIES, LTD.) 09 February 2012 (2012-02-09) paragraph [0057], fig. 2-5 | 1 |
| A | | 2-6 |
| Y | JP 2003-307420 A (MITSUBISHI ELECTRIC CORP.) 31 October 2003 (2003-10-31) paragraphs [0025]-[0028], fig. 17-23 | 1 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **28 June 2021** | **06 July 2021** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2021/015329**

| Patent document cited in search report | | | Publication date (day/month/year) | Patent family member(s) | | | Publication date (day/month/year) |
|---|---|---|---|---|---|---|---|
| JP | 2012-26654 | A | 09 February 2012 | (Family: none) | | | |
| JP | 2003-307420 | A | 31 October 2003 | JP | 2003-307564 | A | |
| | | | | US | 2003/0154792 | A1 | |
| | | | | paragraphs [0091]-[0105], fig. 17-23 | | | |
| | | | | US | 2003/0156585 | A1 | |
| | | | | DE | 10306256 | A | |
| | | | | DE | 10306257 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11173925 A